(19) **Europäisches Patentamt**

**European Patent Office**

**Office européen des brevets**

(11) **EP 0 587 045 B1**

(12) **EUROPÄISCHE PATENTSCHRIFT**

(45) Veröffentlichungstag und Bekanntmachung des Hinweises auf die Patenterteilung:
**26.02.1997 Patentblatt 1997/09**

(51) Int. Cl.$^6$: **C02F 11/10**, C02F 11/06, B09B 3/00, B09B 1/00

(21) Anmeldenummer: **93114034.7**

(22) Anmeldetag: **02.09.1993**

(54) **Verfahren zur Verwertung von Kunststoffabfällen**

Method for the utilization of waste plastics

Procédé pour l'utilisation de déchets en plastique

(84) Benannte Vertragsstaaten:
**AT BE CH DE FR GB IT LI NL**

(30) Priorität: **11.09.1992 DE 4230400**

(43) Veröffentlichungstag der Anmeldung:
**16.03.1994 Patentblatt 1994/11**

(73) Patentinhaber: **BASF Aktiengesellschaft 67063 Ludwigshafen (DE)**

(72) Erfinder:
- **Geiger, Thomas
  D-67071 Ludwigshafen (DE)**

- **Roemer, Rainer, Dr.
  D-69514 Laudenbach (DE)**
- **Seifert, Helmut, Dr.
  D-67069 Ludwigshafen (DE)**
- **Traegner-Duehr, Ulrich, Dr.
  D-54290 Trier (DE)**
- **Broeckel, Ulrich, Dr.
  D-67117 Limburgerhof (DE)**
- **Meyer, Joachim, Dr.
  D-67133 Maxdorf (DE)**
- **Griebel, Axel
  D-69121 Heidelberg (DE)**

(56) Entgegenhaltungen:
**EP-A- 0 106 916          DE-A- 2 616 664**

Printed by Rank Xerox (UK) Business Services
2.13.15/3.4

**Beschreibung**

Die vorliegende Erfindung betrifft ein Verfahren zur Verwertung von Kunststoffabfällen, die bei der Produktion, der Weiterverarbeitung oder nach Gebrauch von Kunststoff anfallen.

Der Kunststoff liegt, falls er aus Produktionsabfällen stammt, in Granulatform vor. Stammt er aus Abfällen, so kann er in beliebiger Form, z. B. als Folien oder Hohlkörper anfallen.

Kunststoffe sind im allgemeinen durch Makromoleküle gekennzeichnet, die z. B. aus Kohlenstoff, Wasserstoff, Sauerstoff, Stickstoff, Chlor, Fluor und Schwefel oder Silizium aufgebaut sind. Sie zeichnen sich in der Regel durch hohe Heizwerte aus.

Eine Entsorgung von Kunststoffen ist durch eine Deponierung prinzipiell möglich. Nachteilig ist dabei, daß bei der Deponierung des Kunststoffes der Heizwert der Kunststoffe verloren geht.

Aufgabe der Erfindung war es demnach, ein Verfahren zu entwickeln, bei dem die zu deponierende Restmenge stark reduziert, die Kunststoffe stofflich verwertet, der Heizwert der Kunststoffabfälle genutzt und die gesamten Entsorgungskosten gesenkt werden.

Diese Aufgaben werden erfindungsgemäß dadurch gelöst, daß man die Kunststoffabfälle

a) zerkleinert, dann mit einem Klärschlamm vermischt, dem organische Flockungsmittel zugegeben werden und dem gegebenenfalls noch weitere Mengen feinteiliger Kohlen und/oder Aschen zugegeben werden,

b) den Kunststoff gegebenenfalls in seinen Oberflächeneigenschaften durch Bindemittel derart modifiziert, daß er besser in den Schlamm eingebunden wird,

c) das vorbehandelte Schlammgemisch der Filtration unterwirft, wobei dem Kunststoff die Eigenschaften eines Filtrationshilfsmittels, d. h. die Verringerung des Filterwiderstandes zukommen kann,

d) die erhaltenen Filterkuchen verbrennt, wobei dem Kunststoff die Funktion eines zusätzlichen Energieträgers zukommt und

e) die Asche beispielsweise auf einer geordneten Deponie ablagert oder einer Verwertung zuführt

oder

a) gegebenenfalls zerkleinert

b) und dann mit einem bereits der Filtration unterworfenen Gemisch aus Klärschlamm, organischem Flockungsmittel und gegebenenfalls noch weiteren Mengen feinteiliger Kohle und/oder Aschen innerhalb oder außerhalb eines Verbrennungsofens vermischt,

c) gegebenenfalls erneut filtriert,

d) das erhaltene Gemisch verbrennt und

e) die Asche beispielsweise auf einer geordneten Deponie ablagert oder einer Verwertung zuführt.

Die Verfahrensschritte 1 und 2 können prinzipiell nach den in den europäischen Patentschriften 53250 und 53251 beschriebenen Verfahren zum Entwässern von Klärschlämmen auf Filterpressen ausgeführt werden. Bei diesen Verfahren werden Klärschlämme mit Zuschlagstoffen, wie feinteilige Kohlen oder Aschen oder deren Gemische, in einer Menge von 0,5 bis 1,5 Gew.-Teilen je Gewichtsteil Schlammfeststoff vermischt, mit organischen Flockungsmitteln in einer Menge von 1 bis 7 bzw. 2 bis 8 kg je t Schlammfeststoff behandelt und schließlich durch Druckfiltration auf Filterpressen weitergehend entwässert.

Durch die Zugabe von feinteiligen Kohlen, aber auch die besondere Art der Schlammkonditionierung (Verfahrensschritt 1) und der Schlammentwässerung (Verfahrensschritt 2) werden Filterkuchen erhalten, die selbständig in Wirbelschichtöfen oder Etagenöfen verbrannt werden können. Eine energiezehrende Trocknung der Klärschlamm-Filterkuchen oder eine Zugabe weiterer Mengen feinteiliger Kohlen und/oder Heizöl, um die Filterkuchen verbrennen zu können, ist nicht erforderlich. Die Verfahren arbeiten demnach mit der Mindestmenge an Kohle, die zur Erlangung einer selbständigen Verbrennung der Klärschlamm-Filterkuchen erforderlich ist.

Eine Aufgabe der vorliegenden Erfindung ist es, den Heizwert der Kunststoffabfälle zu nutzen. Dies gelingt, indem man die Kunststoffabfälle Klärschlämmen vor oder nach der Filtration zugibt, die beispielsweise nach den Verfahren der europäischen Patentschriften 53 250 oder 53 251 entwässert und dann verbrannt werden sollen.

Hierdurch ist es möglich, die zur selbständigen Verbrennung der Klärschlamm-Filterkuchen erforderlichen Mengen an feinteiligen Kohlen durch Kunststoffabfälle ganz oder teilweise zu ersetzen. Auf diese Weise kann der Heizwert der Kunststoffabfälle genutzt und der Einsatz von Primärenergieträgern reduziert werden.

Des weiteren läßt sich bei erfindungsgemäßer Filtration der Kunststoffanteil zur Verbesserung der Filtrationseigenschaften durch Herabsetzung des Filterwiderstandes nutzen, indem der zu filtrierende Schlamm mit Kunststoffzuschlag auf Filtrationsanlagen eine bessere Entwässerung zeigt als bei Entwässerung ohne Kunststoffzusatz. Ferner kann durch dieser Verfahrensweise gegebenenfalls auf andere Filtrierhilfsmittel wie z. B. Asche verzichtet werden, wodurch zum Teil Filterkuchenmengen reduziert aber besonders der abgetrennte Anteil an Schlammtrockensubstanz im Filterkuchen erhöht wird.

Unter Klärschlamm sollen verstanden werden, Primärschlämme, die in der Vorklärstufe einer Kläranlage durch Sedimentation der Schlammfeststoffe erhalten werden, Belebtschlämme, die als Überschußschlämme laufend aus biologischen Kläranlagen ausgeschleust werden, Mischschlämme, die durch Vermischen von Belebtschlamm und Primärschlamm entstehen und Faulschlämme. Diese Schlämme können kommunaler, industrieller oder gemischter Herkunft sein.

Der Feststoffgehalt solcher Schlämme beträgt im allgemeinen 0,5 - 5,0 Gew.-%. Bei Anwendung organischer Flockungsmittel bereits bei der Schlammeindickung liegen die Schlammfeststoffgehalte höher.

Zur Verbesserung der Entwässerbarkeit des Klärschlamms, dem Kunststoffabfälle zugegeben worden sind, werden organische Flockungsmittel eingesetzt. Es können handelsübliche Flockungsmittel-Marken verwendet werden. Hierbei handelt es sich um wasserlösliche, makromolekulare Verbindungen, die durch Polymerisation oder durch Copolymerisation von Acrylamid, von Acrylsäure und/oder ihren Salzen oder von Estern der Acrylsäure bzw. Methacrylsäure, die über ihre Alkoholkomponente speziell modifiziert worden sind. Die Flockungsmittel unterscheiden sich außerdem noch durch ihre unterschiedliche elektrische Ladung (kationisch, anionisch oder elektroneutral) und durch ihren Polymerisationsgrad.

Die Flockungsmittel werden in Form ihrer 0,05 bis 0,2 %igen wäßrigen Lösungen eingesetzt. Die Herstellung solcher verdünnter Flockungsmittellösungen aus den festen und flüssigen Handelsprodukten erfolgt nach bekannten Methoden in handelsüblichen Vorrichtungen.

Die erforderlichen Flockungsmittelmengen liegen im Bereich von 1 bis 8 kg Flockungsmittel/t Schlammfeststoff. Die Dosiermenge ist abhängig von der Art des jeweiligen Schlamms und von der Feststoffkonzentration.

Die Vorauswahl der organischen Flockungsmittel, die für die Verbesserung des Entwässerungsverhaltens der erfindungsgemäßen Schlammgemische eingesetzt werden sollen, kann bereits im Labormaßstab erfolgen, z. B. nach den Methoden, die in der europäischen Patentschrift 8425 beschrieben worden sind.

Ist die Verwendung von Kohle für eine selbständige Verbrennung von Klärschlammfilterkuchen erforderlich, so kann die notwendige Kohlen-Zuschlagmenge ebenso bereits im Labormaßstab nach den Bestimmungsmethoden der europäischen Patentschrift 8 425 ermittelt werden.

Bei der alleinigen Verwendung von feinteiligen Kohlen liegen die Mengenverhältnisse von Kohletrockenstoff (KTS):Schlammtrockenstoff (STS im Bereich von 0,1:1 bis 2,0:1. Die erforderliche Kohlenmenge ist stark abhängig von dem Entwässerungsverhalten der jeweiligen Klärschlämme.

Bisher wird eine Klärschlammverbrennung vorwiegend in Großkläranlagen, in denen größere Schlammmengen anfallen, ausgeübt. Sollten die anfallenden Mengen an Kunststoffabfällen nicht ausreichend sein, um den für eine selbständige Verbrennung von Klärschlamm-Filterkuchen erforderlichen Kohlebedarf zu decken, werden entweder zusätzlich feinteilige Kohlen oder feinteilige Kohlen und Asche zugeschlagen.

Als feinteilige Kohlen kommen in Betracht: Feinkohlen, die bei der Trennung von Feinkohle und Gangart (Berge) durch Flotation und nachfolgende Entwässerung gewonnen werden. Auch Kohleschlämme, die bei Naßaufbereitungsverfahren entstehen, sind geeignet. Ferner können Siebfraktionen von Kraftwerkskohlen oder von Grünkoks aus Raffinerien bis zu einer Korngröße von 1 mm verwendet werden. Weiterhin können auch Ruß z. B. aus der Synthesegaserzeugung, wie in der europäischen Patentschrift 441 209 ausgeführt, verwendet werden.

Im Falle der Verwendung geeigneter Filtrationsanlagen zur Abtrennung der Feststoffe, wie z. B. von Membranfilterpressen, kann auf Asche und ggf. auch auf Kohlezusatz verzichtet werden. Die Funktion beider Zuschlagstoffe kann durch Kunststoffmahlgut mit entsprechendem Heizwert ersetzt werden.

Ist die Verwendung von Aschen als weiterer Zuschlagstoff sinnvoll, dann kommen Aschen, die bei der Verbrennung der Klärschlämme an demselben Ort anfallen, in Betracht. Ferner können Aschen, die bei der Verbrennung von Steinkohle in Kraftwerken anfallen, verwendet werden.

Wird die Verwendung von Asche als zusätzliche Zuschlagstoffe angestrebt, so können die Mengenverhältnisse beispielsweise im Bereich von KTS:ATS (Aschetrockenstoff):STS = 0,2:0, 3:1 bis 0,6:1:1 liegen. Der Bedarf an Kohletrockenstoff kann in diesen Fällen vollständig oder teilweise durch Kunststoffabfälle ersetzt werden.

Die auf Größen von 0,3 bis 2 mm zerkleinerten Kunststoffabfälle und die gegebenenfalls erforderlichen Zuschlagstoffe werden in den Klärschlämmen mit Hilfe von Mischwerken homogen verteilt. Diese können absatzweise oder kontinuierlich betrieben werden. Besonders geeignet haben sich Doppelwellenmischer, Rührbehälter oder Zylinderrührer.

Besonders geeignet zur Zerkleinerung der Kunststoffabfälle sind Schneidmühlen oder Hammermühlen, wobei eine Vorzerkleinerung mit einem Schneidbrecher oder Schneidzerkleinerer vorgeschaltet werden kann. Es ist möglich, die Zerkleinerung unter Einsatz von Kältemitteln wie flüssigem Stickstoff durchzuführen.

Die Zugabe von Flockungsmittellösungen erfolgt entweder in diesen Mischwerken oder aber vor oder nach der Beschickungspumpe für die nachgeschalteten Filterpressen.

Zur besseren Einbindung von Kunststoffmahlgut in Klärschlamm kann vor der Filtration eine Oberflächenmodifikation der Kunststoffpartikel durchgeführt werden. Durch diese Oberflächenmodifikation werden die im allgemeinen hydrophoben Kunststoffpartikel umbenetzt. Verwendet man Polymerdispersionen, wird die spezifische Oberfläche auch bereits hydrophiler Kunststoffpartikel vergrößert und die Verbindung mit dem Klärschlamm zusätzlich verbessert. Als Benetzungsmittel eignen sich Polymerdispersionen wie z.B. Styrol-Butadien-Dispersionen aber auch Tenside, Entschäumer oder ähnliche oberflächenaktive Substanzen wie z. B. Polyethylen- oder Polypropylenglykole.

Diese können dem Klärschlamm, jedoch aus Gründen der verwendeten Mengen, vorzugsweise dem Kunststoffmahlgut zugesetzt werden und gegebenenfalls durch Zusatz weiterer Chemikalien, vorzugsweise durch das spätere Flockungsmittel zur direkten Modifikation der Kunststoffoberfläche eingesetzt werden.

Als Filterpressen kommen Kammerfilterpressen, Rahmenfilterpressen oder Membranfilterpressen in Betracht. Auf diesen Filterpressen wird diskontinuierlich in größeren Schichtdicken im Bereich von 20 bis 40 mm gearbeitet.

Die Filtrierzeiten liegen im Bereich von 90 bis 180 Minuten. Es werden Preßdrücke bis 15 bar angewandt. Bei Einhaltung der erfindungsgemäßen Maßnahmen lösen sich die Filterkuchen einwandfrei von den Filtertückern ab, so daß ein selbsttätiger Abwurf erfolgen kann.

Die erzielten Feststoffgehalte in den Filterkuchen können je nach Entwässerbarkeit der Klärschlämme und der Höhe des Kunststoffanteils im Bereich von 35 bis 55 % liegen. Die Heizwerte der Filterkuchen können 4 600 bis 6 300 kJ/kg (1 100 bis 1 500 kcal/kg) beantragen. Die Filterkuchen können selbständig verbrannt werden.

Das erfindungsgemäße Verfahren kann auch auf kontinuierlich arbeitenden Entwässerungsmaschinen, wie z. B. Bandfilterpressen oder Vakuumbandfiltern ausgeübt werden. In diesen Fällen bringt die reine Kohlekonditionierung gute Ergebnisse. Die Schichtdicken der Filterkuchen betragen im allgemeinen 3 bis 15 mm. Auf eine zusätzliche Verwendung von Aschen kann daher verzichtet werden. Die Feststoffgehalte und die Heizwerte der Filterkuchen liegen insbesondere bei Entwässerung auf Bandfilterpressen auf demselben Niveau wie bei den oben erwähnten Filterpressen.

Bei Verwendung der zerkleinerten Kunststoffabfälle anstelle von handelsüblichen feinteiligen Kohlen zur Konditionierung und Entwässerung werden keine Nachteile bei den Filtrierzeiten und dem Ablöseverhalten der Filterkuchen von den Filtertüchern festgestellt.

Eine weitere Möglichkeit der Verbrennung von Kunststoffabfällen mit Klärschlämmen besteht darin, die Kunststoffabfälle dem bereits fertigen Filterkuchen zuzumischen. Die Zumischung kann entweder in einem externen Mischwerk vor der Aufgabe in den Ofen erfolgen, oder sie geschieht durch ein separates Aufgeben der Kunststoffabfälle in den Ofen.

Weiterhin kann nach Zusatz von Kunststoff zu bereits einmal entwässertem Filterkuchen mit einem zusätzlichen Entwässerungsschritt der Trockenmasseanteil und der Heizwert des Filterkuchens wesentlich erhöht werden.

Besonders geeignet zum Mischen der Kunststoffabfälle mit dem bereits entwässerten Klärschlamm-Filterkuchen vor der Aufgabe in den Ofen haben sich Tragkettenförderer, Doppelpaddelschnecken und Doppelschnecken bewährt.

Der Filterkuchen wird dazu wie bereits oben beschrieben hergestellt. Bei der alleinigen Verwendung von feinteiligen Kohlen liegen die Mengenverhältnisse von Kohlentrockenstoff (KTS):Schlamm-trockenstoff (STS) im Bereich 0,1:1 bis 2,0:1. Die erforderliche Kohlenmenge ist stark abhängig von dem Entwässerungsverhalten der jeweiligen Klärschlämme.

Es kommen dieselben feinteiligen Kohlen wie oben bereits beschrieben in Betracht.

Bei Verwendung von Asche als zusätzliche Zuschlagstoffe liegen die Mengenverhältnisse im Bereich von KTS:ATS:STS = 0:0,5:1 bis 0,6:1:1. Der Bedarf an Kohletrockenstoff kann durch die spätere Zumischung von Kunststoffabfällen vollständig oder teilweise ersetzt werden. Die Entwässerung des Klärschlamms kann dann mit Hilfe der oben näher definierten Aschen geschehen oder wird bei erfindungsgemäßer Verwendung von geeigneten Kunststoffzuschlägen ohne Asche durchgeführt.

Für die Entwässerung kommen dieselben Pressen in Betracht wie bereits oben erwähnt.

Werden die Kunststoffabfälle dem bereits entwässerten Klärschlamm-Filterkuchen vor der Aufgabe in den Ofen in einem Mischer oder im Ofen durch eine separate Aufgabestelle zugemischt, so ist es nicht zwingend erforderlich, die Kunststoffe auf eine Korngröße von 0,3 bis 2 mm zu zerkleinern. Die Große der eingesetzten Kunststoffabfälle kann in Bereichen von 0,3 mm bis 30 cm liegen.

Als besondere Vorteile des erfindungsgemäßen Verfahrens sind zu werten, daß der Heizwert der Kunststoffabfälle genutzt wird und daß das Kunststoffmahlgut die Filtrationseigenschaften von Klärschlamm ohne weitere Zuschläge wesentlich verbessert.

Die Erfindung wird nachfolgend anhand von Beispielen näher erläutert. Die dort angegebenen Prozentzahlen sind immer Gewichtsprozente.

Bei den Beispielen wurde ein Mischschlamm aus einer mechanischbiologischen Kläranlage verwendet, der zu ca.

90 % aus Überschußschlamm und zu ca. 10 % aus Primärschlamm besteht und dessen organischer Anteil am Schlammtrockenstoff (STS) zwischen 55 und 65 % beträgt. Der untere Heizwert des Schlammtrockenstoffs liegt im Mittel bei 14 600 kJ/kg (3 500 kcal/kg).

Als feinteilige Kohle wurden Flotationskohlekonzentrate mit einem unteren Heizwert von 29 300 kJ/kg (7 000 kcal/kg) angewandt.

Bei der verwendeten Asche handelte es sich um die Flugasche aus der Verbrennung des mit Flotationskohle konditionierten und entwässerten Mischschlamms.

Als Kunststoffabfälle wurden sowohl Folien verwendet, die vorher in der Landwirtschaft eingesetzt wurden, als auch Hohlkörperware. Sie bestanden aus Polyethylen, Polypropylen, Polystyrol und PVC sowie aus Mahlgut aus der Autoteilefertigung. Diese wurden einzeln oder gemischt eingesetzt. Der untere Heizwert der Polypropylen/Polyethylen-Kunststoffabfälle liegt im Mittel bei 45 000 kJ/kg, bei Polystyrol bei 40 000 kJ/kg und bei PVC bei 18 500 kJ/kg.

Beispiel 1

1 000 g Mischschlamm mit einem STS-Gehalt von 4,8 % wurden zunächst mit 4,8 g Kunststoffgranulat aus Polyethylen einer mittleren Korngröße kleiner 1 mm vermischt.

Anschließend wurden noch 24,6 g wasserfeuchte Flotationskohle mit einem Kohlegehalt von 78 % sowie 38,4 g trockene Asche zugesetzt und vermischt.

Als Rührorgan wurde ein Blattrührer, Kantenlänge 70 x 70 mm, mit 4 quadratischen Aussparungen von je 1 cm$^2$ verwendet. Die Rührzahl betrug 300 min$^{-1}$; die Gesamtrührzeit betrug 15 min.

Das Mischungsverhältnis der Komponenten KGTS (Kunststoffgranulat-Trockenstoff):KTS (Kohletrockenstoff):ATS (Aschetrockenstoff):STS (Schlammtrockenstoff) betrug 0,1:0,4:4,0;8,1. Die Zuschlagbrennstoffmenge bestand zu 20 % aus Kunststoffgranulat.

Das Gemisch wurde mit 168 ml einer 0,2 %igen wäßrigen Lösung eines organischen Flockungsmittels mit 60 % kationischer Modifizierung versetzt und 30 Sekunden lang bei 200 min$^{-1}$ gerührt.

Daraufhin wurden 1 000 g des geflockten Gemisches auf eine Büchnernutsche von 120 mm Durchmesser mit eingelegtem Polyproplyen-Leinen gegeben und einer Schwerkraftfiltration unterworfen.

Das Filtrat war praktisch feststoffrei.

Nach 30 Minuten Schwerkraftfiltration wurde der Filterrückstand in einer Laborstempelpresse, Filterfläche 145 x 145 mm zwischen zwei Polypropylen-Filtertüchern 2 Minuten lang bei 10 bar ausgepreßt. Es entstand ein fester, formstabiler Filterkuchen mit folgenden Daten:

| | |
|---|---|
| Gesamt-Feststoffgehalt: | 52,7 % |
| STS-Gehalt: | 22,5 % |
| Heizwert Hu: | 5 717 kJ/kg (1 366 kcal/kg) |

Der Filterkuchen war selbständig verbrennbar.

Vergleichsbeispiel

Es wurde ein Gemisch hergestellt wie in Beispiel 1 beschrieben, jedoch ohne Zusatz von Kunststoff-Granulat. Der Zusatz an wasserfeuchter Kohle wurde auf 30,7 g erhöht. Das Mischungsverhältnis der Trockenstoffe KGTS:ATS:STS betrug 0,5:0,8.1.

Das Gemisch wurde weiterbehandelt wie in Beispiel 1 beschrieben.

Für den in der Laborstempelpresse hergestellten Filterkuchen wurden folgende Daten ermittelt:

| | |
|---|---|
| Gesamt-Feststoffgehalt: | 52,3 % |
| STS-Gehalt: | 22,7 % |
| Heizwert Hu: | 5 427 kJ/kg (1 297 kcal/kg) |

Der Filterkuchen konnte selbständig verbrannt werden.

Beispiel 2

Es wurde ein Gemisch aus Mischschlamm, Polyethylen-Granulat, Kohle und Asche hergestellt und weiterverarbeitet, wie in Beispiel 1 beschrieben. Das Mischungsverhältnis KGTS:KTS:ATS:STS betrug jedoch 0,25:0,25:0,8:1. Die Hälfte des Zuschlagbrennstoffes bestand aus Kunststoffgranulat.
Der Filterkuchen aus der Stempelpresse hatte folgende Daten:

| Gesamt-Feststoffgehalt: | 52,1 % |
|---|---|
| STS-Gehalt: | 22,7 % |
| Heizwert Hu: | 5 963 kJ/kg (1 425 kcal/kg) |

Der Filterkuchen konnte selbständig verbrannt werden.

Beispiel 3

Es wurde ein Gemisch aus Mischschlamm, Polyethylen-Granulat und Asche (ohne Kohlezusatz) hergestellt und verarbeitet, wie in Beispiel 1 beschrieben.
Das Mischungsverhältnis KGTS:ATS:STS betrug 0,5:0,8:1. Der Zuschlagbrennstoff bestand zu 100 % aus Kunststoff-Granulat.
Der Filterkuchen aus der Stempelpresse wies folgende Daten auf:

| Gesamt-Feststoffgehalt: | 53,7 % |
|---|---|
| STS-Gehalt: | 23,3 % |
| Heizwert Hu: | 6 339 kJ/kg (1 515 kcal/kg) |

Der Filterkuchen war selbständig verbrennbar.

Beispiel 4

Es wurde eine Mischung aus Mischschlamm, Polyethylen-Granulat und Kohle (ohne Aschezusatz) hergestellt und behandelt, wie in Beispiel 1 beschrieben.
Das Mischungsverhältnis KGTS:KTS:STS wurde auf 0,65:0,65:1 eingestellt. 50 Gew.-% des Zuschlagbrennstoffes bestand aus Kunststoff-Granulat.
Bei der Pressung des Filterrückstandes in der Stempelpresse entstand ein Filterkuchen mit folgenden Daten:

| Gesamt-Feststoffgehalt: | 51,6 % |
|---|---|
| STS-Gehalt: | 22,4 % |
| Heizwert Hu: | 12 136 kJ/kg (2 881 kcal/kg) |

Der Filterkuchen verbrannte selbständig.

Beispiel 5

154 kg Mischschlamm mit einem STS-Gehalt von 5,2 % wurden zunächst mit 4 kg Polyethylen-Granulat vermischt. Außerdem wurden noch 4 kg trockene Asche zugesetzt und homogen eingemischt.
Das Mischungsverhältnis KGTS:ATS:STS betrug 0,5:0,5:1.
Das Gemisch wurde zur Entwässerung in eine Pilot-Kammerfilterpresse, 450 x 450 mm, mit 4 Kammern, Kammertiefe 30 mm, gepumpt. Auf der Saugseite der Pumpe wurden je 1 kg Gemisch 0,18 l einer 0,2 %igen Lösung eines organischen Flockungsmittels mit 60 % kationischer Modifizierung kontinuierlich zudosiert.

Nach 140 min. war die Filtration bei einem Enddruck von 15 bar beendet.

Nach Öffnung der Filterpresse lösten sich die Filterkuchen selbständig vom Filtertuch ab.

Daten des Filterkuchens (Mittelwerte):

| Gesamt-Feststoffgehalt: | 48,8% |
| STS-Gehalt: | 24,4% |
| Heizwert Hu: | 5 939 kJ/kg (1 419 kcal/kg) |

Der Filterkuchen konnte ohne Zusatzbrennstoffe in einem Wirbelschichtofen verbrannt werden.

Beispiel 6

Es wurde eine Mischung aus Mischschlamm und Asche (ohne Kunststoffzusatz) hergestellt und behandelt, wie in Beispiel 5 beschrieben. Das Mischungsverhältnis ATS:STS wurde auf 1:1 eingestellt.

Das Gemisch wurde, wie in Beispiel 5 beschrieben, geflockt und auf einer Pilot-Kammerfilterpresse entwässert.

Die Filterkuchen lösten sich selbständig vom Filtertuch ab.

Daten des Filterkuchens (Mittelwert):

| Gesamt-Feststoffgehalt: | 47,8 % |
| STS-Gehalt: | 23,9 % |
| Heizwert Hu: | 2 070 kJ/kg (495 kcal/kg) |

Durch separates Zuführen von 86 g Polyethylenabfall pro kg Filterkuchen in einem Wirbelschichtofen konnte der Filterkuchen verbrannt werden.

Beispiel 7a

12 kg Mischschlamm wurden mit 120 g Polystyrolmahlgut (Korngröße < 2 mm) ohne Aschezuschlag mit 2,1 l Flockungsmittel Sedipur CF 604 (0,1 % w/v) in einem Rührreaktor gemischt.

Anschließend wurden 7 l dieses Gemisches mit einer Monopumpe auf einer Membranfilterpresse (Rahmengröße 20 x 20 cm, Kammertiefe 20 mm, Membranmaterial Polypropylen) gefördert. nach einer Füll-zeit von 15 Minuten wurde bei steigendem Druck (bis 4,5 bar) der Filterkuchen für 140 Minuten entwässert. Es ergaben sich 775 g Filterkuchen mit einer Trockenmasse von 340 g. Hiervon betrug die Schlammtrockensubstanz 280 g.

| Gesamt-Feststoffgehalt: | 43,9 % |
| STS-Gehalt: | 36,5 % |
| Heizwert Hu: | 6 420 kJ/kg (1 536 kcal/kg) |

Vergleichsbeispiel 7b

6 kg Mischschlamm wurden mit 30 g Asche und 33 g Schlammkohle (82,4 % w/v) pro kg Mischschlamm unter Zugabe von 2,1 l Flockungsmittel Sedipur CF 604 (0,1 % w/v) in einem Rührkessel analog Beispiel 7 gemischt. Anschließend wurden 6,5 l dieser Mischung wie in Beispiel 7 auf der Membranfilterpresse filtriert. Dabei wurde ein Filterkuchen von 888 g mit einer Trockenmasse von 488 g erzielt. Der Filterkuchen enthielt 213 g Schlammtrockensubstanz.

| Gesamt-Feststoffgehalt: | 54,9 % |
|---|---|
| STS-Gehalt: | 23,9 % |
| Heizwert Hu: | 6 655 kJ/kg (1 589 kcal/kg) |

| | Beispiel 7b | Beispiel 7a | Differenz a zu b |
|---|---|---|---|
| filtrierte Gesamtmenge *1) | 6,5 l | 7,0 l | + 8,0 % |
| Gesamtmenge Filtrat | 5 615,0 ml | 6 625,0 ml | + 11,0 % |
| Gesamtmenge Filterkuchen | 885,0 ml | 775,0 ml | - 13,0 % |
| Trockenmasse Filterkuchen | 488,0 g | 340,0 g | - 31,0 % |
| Schlammtrockensubstanz | 213,0 g | 280,0 g | + 31,0 % |
| Anteil Schlammtrockensubstanz an der Gesamttrockenmasse | 43,0 % | 82,0 % | + 39,0 % |
| Wasserbeladungszahl *2) | 1,79 | 1,55 | - 11,0 % |

*1) bei gleicher Filtrationsdauer
*2) g Wasser/g STS

Beispiel 8

Zu 118 kg Mischschlamm mit einem STS-Gehalt von 5,7 % wurden 2 kg Polystyrol-/Polyvinylchloridmahlgut (je 50 %) gemischt und unter Zugabe von 34 l Sedipur-Lösung (0,1 % w/v) geflockt. Das Gemisch wurde auf einer Membranfilterpresse (Kammertiefe 25 mm, Filterfläche 40 cm x 40 cm, Polypropylenfiltertuch) innerhalb von 150 Minuten bei ansteigendem Druck von 0 - 15 bar filtriert. Dabei wurde über alle Filterplatten ein durchschnittliches Trockengewicht von 52,7 % und einem STS von 40,5 % ($\hateq$ 1,16 g H2O/g STS) erzielt. Der Heizwert betrug 7 670 kJ/kg ($\hateq$ 1 835 kcal/kg).

Beispiel 9

1 kg Filterkuchen aus einer Klärschlammfiltration, die unter Zuschlag von Kohle und Asche durchgeführt wurde und 40,3 % Gesamttrockenmasse (davon 53,4 % STS) hatte, wurde zusätzlich mit 57 g Polystyrolmahlgut (< 2 mm) beaufschlagt und einer erneuten Filtration auf einer Laborbandfilterpresse (Polypropylen-Filtertuch) unterworfen. Bei dieser Filtration wurde der eingesetzte Filterkuchen mit einem Druck von 0,5 - 2 bar und einem Flächendruck-Linien von 1,5 - 2,5 bar gepreßt. Der so nachbehandelte Filterkuchen besaß einen Gesamttrockengehalt von 66,5 % und einen Heizwert von 10 588 kJ/kg ($\hateq$ 2 533 kcal/kg). Die Filterkuchenmenge wurde von 1 kg auf 662 g reduziert.

Beispiel 10 a

verschiedene Kunststoffsorten (Mengen und Sorten s. Tabelle) wurden als Mahlgut (< 2 mm) in 100 ml Butonal-Lösung (3,7 % w/v) als stabilisierende Polymerdispersion eingemischt. Unter Rühren wird dieses Gemisch durch Zugabe von 100 ml einer Lösung des Flockungsmittels Sedipur (0,1 % w/v) destabilisiert. Dabei verteilt sich die Polymerdispersion unter gleichzeitiger Hydrophilierung auf der Oberfläche der Kunststoffpartikel.

Diese Mischung wird dann in weitere 1,7 l Sedipur-Lösung eingerührt und anschließend zur Flockung von 6 kg Mischschlamm eingesetzt. 150 ml des derart geflockten Schlamms werden auf einer Labordruckfilteranlage (Filterfläche 20 cm$^2$) bei 1,5 bar filtriert und der Filterwiderstand nach nachstehender Formel ermittelt.

$$\alpha \times \eta = \frac{2 \times \text{Filterfläche} \times \text{Druck} \times \text{Filtrationszeit}}{\text{Volumen des Filtrats} \times \text{Kuchenhöhe}}$$

($\eta$ = Viskosität, $\alpha$ = spez. Filterwiderstand)

Mit folgenden Kunststoffsorten und -mengen wurden die jeweiligen Filterwiderstände erzielt:

a) 36 g Polypropylen Filterwiderstand 31 x $10^{12}$ mPas/$m^2$

b) 108 g Polypropylen Filterwiderstand 9,7 x 1012 mPas/m2

c) 36 g Polypropylen
36 g Polyvinylchlorid
36 g Polystyrol Filterwiderstand 32 x $10^{12}$ mPas/$m^2$
36 g Polyethylen

d) 27 g Polypropylen
27 g Polyvinylchlrorid
27 g Polystyrol Filterwiderstand 28 x $10^{12}$ mPas/$m^2$
27 g Polyethylen

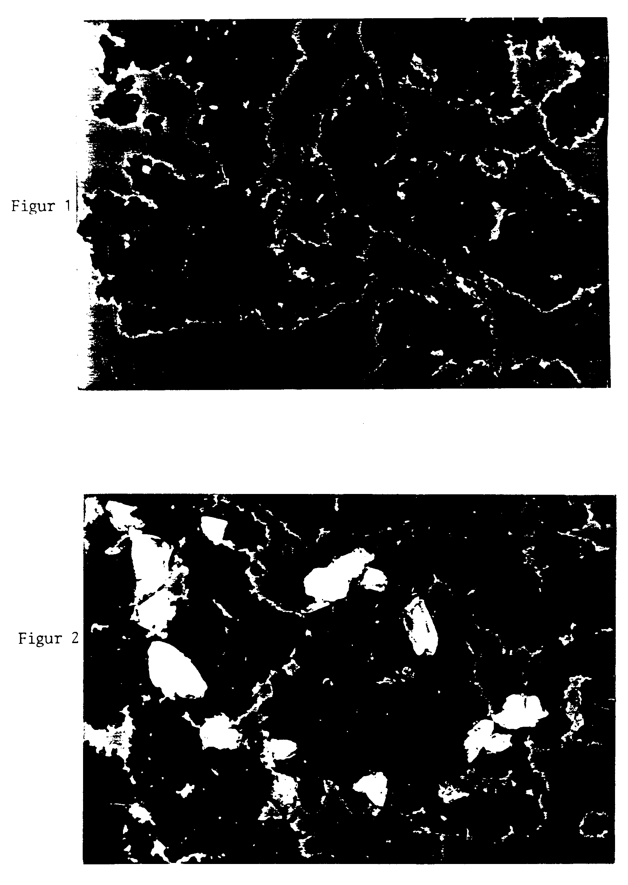

Die zugesetzten Kunststoffpartikel werden in allen Fällen in die Klärschlammflocken eingebunden, wie Abb. 1 und 2 zeigen.

Dabei sind in Abb. 1 Kunststoffpartikeln mit Oberflächenmodifizierung dargestellt. Hierbei zeigt sich, daß sich durch die Oberflächenmodifikation Klärschlammpartikel an die Kunststoffoberfläche anlagern können und eine Einbindung des Kunststoffmahlgutes in den Filterkuchen ermöglichen.

In Abb. 2 sind Kunststoffpartikeln ohne Oberflächenmodifizierung. Hierbei zeigt sich, daß die Oberfläche der Kunststoffpartikel durch Klärschlamm nicht benetzt wird und sich kein Klärschlamm anlagert.

Vergleichsbeispiel 10 b

6 l Mischschlamm wurden mit 1,8 l Sedipurlösung (0,1 % w/v) geflockt und analog zum Versuch 10, allerdings ohne Kunststoff- und Butonalzuschlag, auf einer Labordruckfilteranlage abfiltriert. Der dabei erzielte Filterwiderstand betrug nach o. g. Formel 90 x $10^{12}$ mPas/$m^2$.

Beispiel 11

82 kg Mischschlamm mit 4,5 % STS wurden mit Kunststoffmahlgut (117,5 g Polyvinylchlorid, 117,5 g Polystyrol, 117,5 g Polypropylen) gemischt und durch Zugabe von 17,6 l Sedipur CF 604 (0,1 % w/v) in einem Zylinderrührer bei 450 Upm und einem Durchfluß von 630 l/h geflockt.

Anschließend wurde das Gemisch in eine Membranfilterpresse (Filterfläche 40 cm x 40 cm, Kammertiefe 32 mm, Polypropylen-Filtertücher) für 15 Minuten bei max. 4 bar gefüllt und für 80 Minuten bis 15 bar gepreßt. Dabei entstanden 10,1 kg Filterkuchen mit einer durchschnittlichen Trockenmasse von 40,45 % bzw. einem STS-Gehalt von 36,8 %. Der durchschnittliche Heizwert betrug 4 602 kJ/kg ($\hat{=}$ 1 101 kcal/kg).

**Patentansprüche**

1. Verfahren zur Verwertung von Kunststoffabfällen, die bei der Produktion, der Weiterverarbeitung oder nach Gebrauch des Kunststoffs anfallen, dadurch gekennzeichnet, daß man die Kunststoffabfälle in einer Klärschlammbehandlungsanlage

a) zerkleinert, dann mit einem Klärschlamm vermischt, dem organische Flockungsmittel zugegeben werden und dem gegebenenfalls noch weitere Mengen feinteiliger Kohlen und/oder Aschen zugegeben werden,

b) den Kunststoff gegebenenfalls in seinen Oberflächeneigenschaften durch Bindemittel derart modifiziert, daß er besser in den Schlamm eingebunden wird,

c) dieses vorgehandelte Schlammgemisch der Filtration unterwirft, wobei dem Kunststoff die Eigenschaften eines Filtrationshilfsmittels, d. h. die Verringerung des Filterrückstandes zukommen kann,

d) die erhaltenen Filterkuchen verbrennt wobei dem Kunststoff die Funktion eines zusätzlichen Energieträgers zukommt und

e) die Asche beispielsweise auf einer geordneten Deponie ablagert oder einer Verwertung zuführt

oder

a) gegebenenfalls zerkleinert

b) und dann mit einem bereits der Filtration unterworfenen Gemisch aus Klärschlamm, organischem Flokkungsmittel und gegebenenfalls noch weiteren Mengen feinteiliger Kohle und/oder Aschen innerhalb oder außerhalb eines Verbrennungsofens vermischt,

c) gegebenenfalls erneut filtriert,

d) das erhaltene Gemisch verbrennt und

e) die Asche beispielsweise auf einer geordneten Deponie ablagert oder einer Verwertung zuführt.

## Claims

1. A process for exploiting plastic wastes arising in the production or further processing or after use of the plastic, which comprises, in a sewage treatment plant,

a) comminuting the plastic wastes, then mixing them with a sewage sludge to which organic flocculants are added with or without the addition of further amounts of finely divided coal and/or ash,
b) if appropriate, modifying the surface properties of the plastic with binders in such a way that it binds better in the sludge,
c) filtering the pretreated sludge mixture, where the plastic can assume the properties of a filtration aid, i.e. the filtering residue is reduced,
d) incinerating the resulting filter cake, where the plastic assumes the function of an additional energy source and
e) depositing the ash for example in a sanitary landfill or exploiting it,

or

a) if appropriate, comminuting the plastic wastes
b) and then mixing them with a previously filtered mixture of sewage sludge, organic flocculants with or without further amounts of finely divided coal and/or ash inside or outside an incinerator,
c) filtering it again if appropriate,
d) incinerating the resulting mixture and
e) depositing the ash for example in a sanitary landfill or exploiting it.

## Revendications

1. Procédé de valorisation de déchets de plastique produits lors de la production, lors de la transformation ou après l'utilisation du plastique, caractérisé par le fait que dans une installation de traitement de boues d'épuration,

a) on fragmente les déchets de plastique, puis les mélange avec une boue d'épuration à laquelle sont ajoutés des floculants organiques et éventuellement encore ajoutées des quantités supplémentaires de charbons fins et/ou de cendres fines,

b) on modifie éventuellement les propriétés superficielles du plastique au moyen de liants de façon telle qu'il s'incorpore mieux à la boue,

c) on soumet ce mélange de boue prétraité à la filtration, au plastique pouvant revenir les propriétés d'adjuvant de filtration, c'est-à-dire la diminution du résidu de filtration,

d) on incinère le gâteau de filtration obtenu, au plastique revenant la fonction de source supplémentaire d'énergie, et

e) par exemple on dépose la cendre sur une décharge organisée ou la conduit à une valorisation,

ou

a) on fragmente éventuellement les déchets de plastique

b) et ensuite les mélange à l'intérieur ou à l'extérieur du four d'incinération avec un mélange déjà soumis à la filtration constitué de boue d'épuration, de floculant organique et éventuellement de quantités supplémentaires de charbons fins et/ou de cendres fines,

c) éventuellement filtre de nouveau,

d) incinère le mélange obtenu et

e) par exemple dépose la cendre sur une décharge organisée ou la conduit à une valorisation.

Figur 1

Figur 2